(19) Europäisches Patentamt
European Patent Office
Office européen des brevets

(11) EP 4 026 853 A1

(12) **EUROPEAN PATENT APPLICATION**

(43) Date of publication:
**13.07.2022 Bulletin 2022/28**

(21) Application number: **21151038.3**

(22) Date of filing: **11.01.2021**

(51) International Patent Classification (IPC):
***C08B 31/00*** *(2006.01)* ***C08B 37/02*** *(2006.01)*

(52) Cooperative Patent Classification (CPC):
**C08B 37/0021; C08B 31/006**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Adocia**
**69003 Lyon (FR)**

(72) Inventors:
- **SOULA, Gérard**
**69330 Meyzieu (FR)**
- **GEISSLER, Alexandre**
**69330 Meyzieu (FR)**
- **LAURENT, Nicolas**
**01700 Miribel (FR)**
- **PLANCQ, Baptiste**
**01700 Saint Maurice de Beynost (FR)**

(74) Representative: **Tripoz, Inès**
**Cabinet Tripoz**
**Le Pôle Sud**
**22 rue Seguin**
**69002 Lyon (FR)**

(54) **HYDROGELS FOR CELL THERAPY**

(57) 1. Crosslinked dextran polymer, bearing carboxylate groups, wherein at least two saccharidic units of dextran belonging to two different polymer chains are covalently linked by at least one at least divalent radical, this at least divalent radical being a linear, branched or cyclic alkyl radical comprising at least 15 carbon atoms and optionally heteroatoms such as oxygen, nitrogen or sulfur

EP 4 026 853 A1

## Description

The domain of the invention is cell therapy. More particularly the invention is about an implant comprising a hydrogel which may incorporate

- active principles, such as peptides, hormones or proteins, or
- secreting cells, which may cells secreting peptides or hormones, allowing the treatment of chronic diseases by replacing totally or in part the function of natural occurring cells which are deficient in the patients. The invention is also about the crosslinked polymer and its precursors.

The cells may be isolated or aggregated, and may by of one type or of different types.
Hydrogels can be used in multiple systems like scaffolds to controlled drug or active pharmaceutical ingredient release systems or also as scaffolds to be used as implantable device comprising cells.
Hydrogels consists of polymers that are cross-linked in a 3D networks. They can either be natural or synthetic, homopolymers or copolymers. They have the ability to absorb and retain large amounts of water. This is known as the swelling of hydrogels and is due to the hydrophilic nature of some of the functional groups (like alcohols, carboxyls, etc.) of the backbone chain.
In order to have a system which may be an implant able to deliver active principle on the long run, many features have to be obtained.
Among these features may be cited

- a low degradability, in particular a low biodegradability, in order for the cells not to go in the organism of the patient,
- a good permselectivity, allowing a low, or even better no, immune response by isolating the incorporated cells, totally or in part, from the immune system of the host, while allowing the passage of the active principle, for example hormone, peptide or protein,
- good mechanical properties, for example being solid enough and flexible, for an easy manipulation,
- good rheological properties,
- a good mitigation of the foreign body response, or a good biocompatibility, in particular a low cytotoxicity and a good local tolerance,
- conditions allowing the cells to have a high survival rate, such has a good vascularisation close to the cells,
- allowing a good vascularisation of the cells,
- a good homogeneity, for example the hydrogel being transparent or translucid is a good sign of it.

In order to be used as controlled release systems or scaffolds for cells, hydrogels must have particular characteristics so as to exhibit all or part of the desired properties such as disclosed above.
The underlying problem is solved by the provision of a gel that presents physicochemical properties to allow the manufacture of an implantable device and biocompatibility properties that allow the cells survival.
Moreover, the hydrogels of the invention are tunable in many ways considering the precursors used and the way the crosslinking is performed.
Hydrogels can be used in multiple systems like scaffolds to controlled drug or active pharmaceutical ingredient release systems or also as scaffolds to be used as implantable device comprising cells.
Hydrogels consists of polymers that are cross-linked in a 3D networks. They can either be natural or synthetic, homopolymers or copolymers. They have the ability to absorb and retain large amounts of water. This is known as the swelling of hydrogels and is due to the hydrophilic nature of some of the functional groups (alcohols, carboxyls, etc.) of the backbone chain.
In order to be used as controlled release systems or scaffolds for cells hydrogels must have particular physicochemical and rheological properties, but also biocompatibility properties.
Amongst the physicochemical and rheological properties, the hydrogels we can cite mechanical properties but also, swelling, mesh size, and degradation.

- in vivo stability,

- Tan $\delta$ is lower than 1,

- tensile test,

- porosite mesh size with young modulus,

- transparency.

The suitability of hydrogel depends on its bulk structure so important parameters used to characterize the network structure of hydrogel according to the invention are the polymer volume fraction in the swollen state, the molecular weight of the polymer chain between two neighbouring crosslinking points, and the corresponding mesh size.

Amongst the biocompatibility properties we can cite:

- Vascularization
- Non cytotoxicity

The underlying problem is solved by the provision of a gel that presents physicochemical properties to allow the manufacture of an implantable device and biocompatibility properties that allow the cells survival.

The problem is solved by the provision a new crosslinked dextran polymer, bearing carboxylate groups, wherein at least two saccharidic units of dextran belonging to two different polymer chains are covalently linked by at least one at least divalent radical, this at least divalent radical being a linear, branched or cyclic alkyl radical comprising at least 15 carbon atoms and optionally heteroatoms such as oxygen, nitrogen or sulfur.

The properties of this family of hydrogels are tunable and tailorisable to the applications by choosing and adapting the crosslinking reaction conditions, the substitution degree and molecular weight of the dextrans and crosslinkers.

In an embodiment, the crosslinked dextran polymer according to the invention is a dextran polymer bearing carboxylate groups wherein the at least divalent radical $-L(-)_i$ is covalently bound to the dextran polymer backbone with a $-(R_1)_mG_1$-radical, wherein,

- $L(-)_i$ is a linear or branched polyether bearing at its ends, heteroatoms such as oxygen, nitrogen or sulfur,
- i is the valence of L and is an integer comprised from 2 to 8 ($2 \leq i \leq 8$)
- m is an integer equal to 0 or 1,
- $-R_1-$ is a linear or branched alkyl divalent radical comprising from 1 to 6 carbon atoms and optionally heteroatoms such as oxygen, nitrogen or sulfur,
- $-G_1-$ is a linear or branched or cyclic alkyl divalent radical comprising from 1 to 6 carbon atoms and may comprise heteroatoms such as oxygen, nitrogen or sulfur.

In an embodiment, the crosslinked dextran polymer according to the invention is a dextran polymer wherein $L(-)_1$ is a linear polyether radical bearing at its ends, at least two heteroatoms such as oxygen, nitrogen or sulfur,

In an embodiment, the crosslinked dextran polymer according to the invention is a dextran polymer wherein $L(-)_i$ is a branched polyether bearing at its i ends, i heteroatoms such as oxygen, nitrogen or sulfur.

By branched polyether is meant several polyether arms connected by a linker. The linker may be an alkyl comprising between 2 to 20 carbon atoms, and optionally heteroatoms such as oxygen, nitrogen or sulfur.

In an embodiment, the crosslinked dextran polymer according to the invention is a dextran polymer wherein $L(-)_i$ is a branched polyether bearing at its ends, at least two heteroatoms such as oxygen, nitrogen or sulfur comprising at most 8 arms.

In an embodiment, the crosslinked dextran polymer according to the invention is a dextran polymer wherein $L(-)_i$ with i = 2 is a branched polyether bearing at its ends, 3 heteroatoms such as oxygen, nitrogen or sulfur comprising 3 arms.

In an embodiment, the crosslinked dextran polymer according to the invention is a dextran polymer, wherein $L(-)_i$ with i = 3 is a branched polyether bearing at its ends, 4 heteroatoms such as oxygen,nitrogen or sulfur comprising 4 arms.

In an embodiment, the crosslinked dextran polymer according to the invention is a dextran polymer, wherein $L(-)_i$ with i = 4 is a branched polyether bearing at its ends, 5 heteroatoms such as oxygen, nitrogen or sulfur comprising 5 arms.

In an embodiment, the crosslinked dextran polymer according to the invention is a dextran polymer wherein $L(-)_i$ with i = 5 is a branched polyether bearing at its ends,6 heteroatoms such as oxygen,nitrogen or sulfur comprising 6 arms.

In an embodiment, the crosslinked dextran polymer according to the invention is a dextran polymer wherein$L(-)_i$ with i = 6 is a branched polyether bearing at its ends,7 heteroatoms such as oxygen,nitrogen or sulfur comprising 7 arms.

In an embodiment, the crosslinked dextran polymer according to the invention is a dextran polymer wherein $L(-)_i$ with i = 7 is a branched polyether bearing at its ends,8 heteroatoms such as oxygen, nitrogen or sulfur comprising 8 arms.

In an embodiment, the crosslinked dextran polymer according to the invention is a dextran polymer wherein

$L(-)_i$ with i = 1 is a linear polyether bearing at its ends two sulfur atoms.

In an embodiment, the crosslinked dextran polymer according to the invention is a dextran polymer wherein $L(-)_i$ with i = 3 is a branched polyether bearing at its ends at most 4 sulfur atoms.

In an embodiment, the crosslinked dextran polymer according to the invention is a dextran polymer wherein $L(-)_i$ is a branched polyether bearing at its ends a sulfur atom and comprising at most 8 arms.

In an embodiment, the crosslinked dextran polymer according to the invention is a dextran polymer wherein $L(-)_i$ is a branched polyether bearing at its ends two sulfur atoms and comprising 2 arms.

In an embodiment, the crosslinked dextran polymer according to the invention is a dextran polymer wherein $L(-)_i$ with i = 2 is a branched polyether bearing at its ends 3 sulfur atoms and comprising 3 arms.

In an embodiment, the crosslinked dextran polymer according to the invention is a dextran polymer wherein $L(-)_i$ with i = 3 is a branched polyether bearing at its ends 4 sulfur atoms and comprising 4 arms.

In an embodiment, the crosslinked dextran polymer according to the invention is a dextran polymer wherein $L(-)_i$ with i = 7 - is a branched polyether bearing at its ends 8 sulfur atoms and comprising 8 arms.

In an embodiment, the crosslinked dextran polymer according to the invention is a dextran polymer wherein $L(-)_i$ is a radical issued from a linear or branched mercaptopolyethyleneglycol comprising at least two sulfur atoms and comprising at most 8 arms, which

- number-average molecular weight (Mn) is comprised from 500 to 40 000 g/mol ($500 \leq Mn \leq 40\,000$ g/mol) or
- polymerisation degree (DP) is comprised from 8 to 1000 ($8 \leq DP \leq 1000$).

In an embodiment, the crosslinked dextran polymer according to the invention is a dextran polymer wherein $L(-)_i$ is a radical issued from a linear or branched mercaptopolyethyleneglycol comprising at least two sulfur atoms and comprising at most 8 arms, which

- Mn is comprised from 1000 to 25 000 g/mol ($1000 \leq Mn \leq 25\,000$ g/mol) or
- polymerisation degree is comprised from 8 to 1000 ($15 \leq DP \leq 600$).

In an embodiment, the crosslinked dextran polymer according to the invention is a dextran polymer wherein L- is a radical issued from a mercaptopolyethyleneglycol according to formula II:

$$-S-(CH_2-CH_2-O)_p-CH_2-CH_2-S- \quad \text{Formula II}$$

wherein p is an integer comprised from 8 to 1000 ($8 \leq p \leq 1000$).

In an embodiment, the crosslinked dextran polymer according to the invention is a dextran polymer wherein L**(-)$_i$** is a radical according to formula III issued from a mercaptoethyl polyoxyethylene:

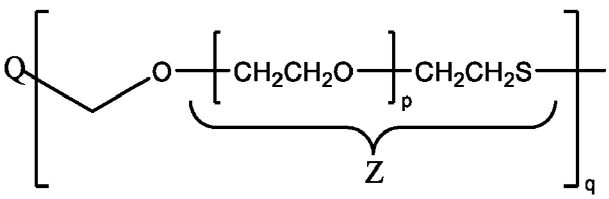

Formula III

wherein

- Q is either a carbon atom or an alkyl chain comprising from 2 to 10 carbon atoms , the alkyl chain may comprise heteroatom chosen from the group consisting of oxygen, sulfur and nitrogen

- p is an integer comprised form to y ($x \leq p \leq y$)

- q is an integer comprised form 2 to 8 ($1 \leq p \leq 8$)

- Z is $-(CH_2-CH_2)_p-CH_2-CH_2-S-$.

In an embodiment Q is an alkyl chain comprising 2 to 8 carbon atoms and 1 or 2 oxygen atoms.

In an embodiment, the crosslinked dextran polymer according to the invention is a dextran polymer wherein $L(-)_i$ is a radical according to formula VII

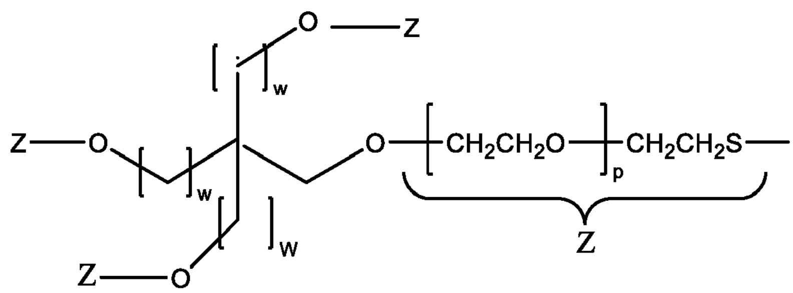

Formula VII

wherein

- p is comprised from x to y, (x ≤ p ≤ y)
- w is comprised from x to y, (x ≤ p ≤ y)
- Z is $-(CH_2-CH_2O)_p-CH_2-CH_2-S-$

In an embodiment, the crosslinked dextran polymer according to the invention is a dextran polymer wherein $L(-)_i$ is a radical according to formula II or III issued of the thiol polyethylene glycols or mercaptopolyoxyethylenes cited in the following table:

| Chemical Name | i | Mn (kg/mol) |
|---|---|---|
| Poly(ethylene glycol) dithiol | 2 | 10 |
| Poly(ethylene glycol) dithiol | 2 | 3.4 |
| Poly(ethylene glycol) dithiol | 2 | 1 |
| Pentaerythritol tetra (merca ptoethyl) polyoxyethylene | 4 | 5.2 |
| Pentaerythritol tetra (merca ptoethyl) polyoxyethylene | 4 | 20 |
| tripentaerythritol tetra(mercaptoethyl) polyoxyethylene | 8 | 20 |

In an embodiment, the crosslinked dextran polymer according to the invention is a dextran polymer wherein $L(-)_i$ is a radical according to formula IV issued of a pentaerythritol tetra(mercaptoethyl) polyoxyethylene, CAS# 188492-68-4.

In an embodiment, the crosslinked dextran polymer according to the invention is a dextran polymer wherein -R1- is a linear or branched or cyclic alkyl radical comprising a nitrogen atom.

In an embodiment, the crosslinked dextran polymer according to the invention is a dextran polymer wherein $R_1$, is a linear alkyl radical comprising from 1 to 6 carbon atoms and a nitrogen atom.

In an embodiment, the crosslinked dextran polymer according to the invention is a dextran polymer wherein $R_1$, is a linear amine radical comprising from 2 to 5 carbon atoms and a nitrogen atom.

In an embodiment, the crosslinked dextran polymer according to the invention is a dextran polymer wherein $R_1$, is a linear amine radical comprising from 3 to 4 carbon atoms and a nitrogen atom.

In an embodiment, the crosslinked dextran polymer according to the invention is a dextran polymer wherein $R_1$, is a linear amine radical comprising 2 carbon atoms and a nitrogen atom.

In an embodiment, the crosslinked dextran polymer according to the invention is a dextran polymer wherein $R_1$, is a linear amine radical comprising from 2 to 5 carbon atoms and a nitrogen atom according to formula XIII:

$-NHCH_2CH_2-$ Formula XIII

In an embodiment, the crosslinked dextran polymer according to the invention is a dextran polymer wherein radical $-R_1-$ is covalently bound by an amide function resulting of the reaction of the carboxylate groups $-(CH_2)_n-COOX$ born by the dextran with one $-R_1-$ precursor bearing an amine function.

In an embodiment, the crosslinked dextran polymer according to the invention is a dextran polymer wherein radical $-R_1-$ is covalently bound by an ether function resulting of the reaction of the hydroxyle function born by the dextran

with one $-R_1-$ precursor bearing a leaving group, in particular a halogen atom.

In an embodiment, the crosslinked dextran polymer according to the invention is a dextran polymer wherein $-G_2-$ which is the precursor of radical $-G_1-$ is chosen amongst maleimide or vinylsulfone.

In an embodiment, the crosslinked dextran polymer according to the invention is a dextran polymer wherein $-G_2-$ is maleimide.

In an embodiment, the crosslinked dextran polymer according to the invention is a dextran polymer wherein the radical $-G_1-$ is a radical according to formula V:

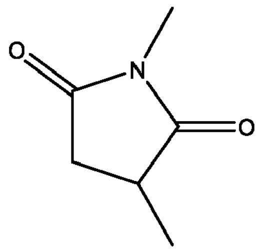

Formula V

In an embodiment, the crosslinked dextran polymer according to the invention is a dextran polymer wherein $-(R_1)_mG_1$ covalently bound to carboxylate groups born by the dextran polymer backbone is a radical according to formula VI:

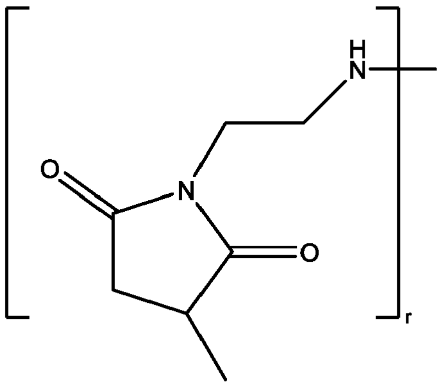

Formula VI

- wherein r is an integer equal to 1.

In an embodiment, the crosslinked dextran polymer according to the invention is a dextran polymer wherein $-(R_1)_mG_1-$ covalently bound to carboxylate groups born by the dextran polymer backbone is a radical according to formula VIII:

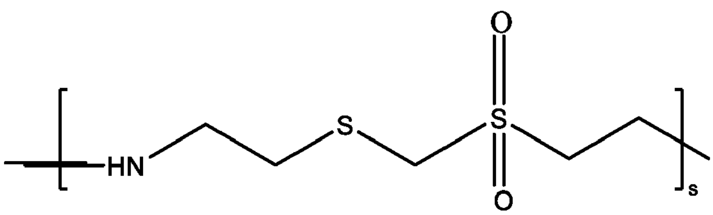

Formula VIII

wherein s is an integer comprised from 1 to 3 ($1 \le s \le 3$) and preferably is 1.

In an embodiment, the crosslinked dextran polymer according to the invention is a dextran polymer wherein $-(R_1)_mG_1-$ covalently bound to hydroxyle functions born by the dextran polymer backbone is a radical according to formula X:

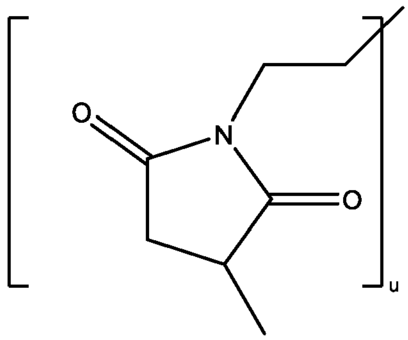

Formula X

- wherein u is an integer comprised from 1 to 3 ($1 \leq u \leq 3$) and preferably is 1.

In an embodiment, the crosslinked dextran polymer according to the invention is a dextran polymer wherein $-(R_1)_mG_1-$ covalently bound to hydroxyle functions born by the dextran polymer backbone is a radical according to formula XI:

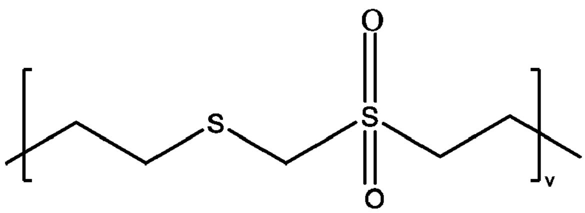

Formula XI

- wherein v is an integer comprised from 1 to 3 ($1 \leq v \leq 3$) and preferably is 1.

In an embodiment, the crosslinked dextran polymer according to the invention is a dextran polymer wherein the carboxylate groups bound to the saccharidic units are bound by ether bonds and chosen amongst linear or branched alkyl radicals bearing at least a carboxylate group.

In an embodiment, the crosslinked dextran polymer according to the invention is a dextran polymer wherein carboxylate groups bound to the saccharidic units are bound by ether bonds and chosen amongst carboxylate groups according to formula I

$-(CH_2)_n-COX$ Formula I

wherein

- n is an integer comprised form 1 to 7 ($1 \leq n \leq 7$)
- X is chosen amongst -OH, -ONa, -OK or $-(R_1)_mG_1-$ radical.

In an embodiment, the crosslinked dextran polymer according to the invention is a dextran polymer wherein $-(CH_2)_n-COX$ is covalently bound to the dextran polymer backbone by an ether function resulting of the reaction of the hydroxyle function born by the dextran.

In an embodiment, the crosslinked dextran polymer according to the invention is a dextran polymer wherein $-(CH_2)_n-COX$ which is not bound to $-(R_1)_mG_1-$radical is in a salt form and X is chosen amongst ONa or OK.

In an embodiment, the crosslinked dextran polymer according to the invention is a dextran polymer wherein $-(CH_2)_n-COX$ is chosen amongst the radical wherein n is comprised from 1 to 7.

In an embodiment, the crosslinked dextran polymer according to the invention is a dextran polymer wherein $-(CH_2)_n-COX$ is chosen amongst the radical wherein n is compreised from 1 to 6.

In an embodiment, the crosslinked dextran polymer according to the invention is a dextran polymer wherein $-(CH_2)_n-COX$ is chosen amongst the radical wherein n is comprised from 1 to 5.

In an embodiment, the crosslinked dextran polymer according to the invention is a dextran polymer wherein $-(CH_2)_n-COX$ is chosen amongst the radical wherein n is comprised from 1 to 4.

In an embodiment, the crosslinked dextran polymer according to the invention is a dextran polymer wherein $-(CH_2)_n-COX$ is chosen amongst the radical wherein n is comprised from 1 to 3.

In an embodiment, the crosslinked dextran polymer according to the invention is a dextran polymer wherein $-(CH_2)_n-COX$ is chosen amongst the radical wherein n is comprised from 1 to 2.

In an embodiment, the crosslinked dextran polymer according to the invention is a dextran polymer wherein $-(CH_2)_n-COX$ is chosen amongst the radical wherein n is 1.

In an embodiment, the crosslinked dextran polymer according to the invention is a dextran polymer wherein the dextran polymer backbone is according to formula XII,

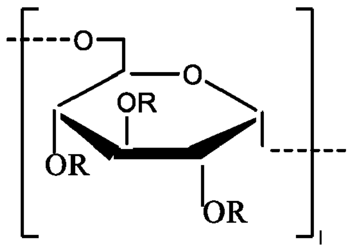
Formula XII

wherein R is chosen among

- -H, $-(CH_2)_n-COX$ or $-(R_1)_mG_1-$; l, n, m, X, $-R_1-$, $-G_1-$ and $L(-)_i$ being defined as above and $L(-)_i$ being covalently bound to another dextran polymer backbone with a $-(R_1)_mG_1-$ - radical, and
- l is comprised from 20 to 5000.

In an embodiment, the crosslinked dextran polymer according to the invention is a dextran polymer wherein the dextran polymer backbone is a dextran having a weight average molecular weight (Mw) comprised from 5 to 1000 kDa before crosslinking or substitution.

In an embodiment, the crosslinked dextran polymer according to the invention is a dextran polymer wherein the dextran polymer backbone is a dextran having a weight average molecular weight (Mw) from 5 to 250 kDa before crosslinking or substitution.

In an embodiment, the crosslinked dextran polymer according to the invention is a dextran polymer wherein the dextran polymer backbone is a dextran having a weight average molecular weight (Mw) from 5 to 50 kDa before crosslinking or substitution.

In an embodiment, the crosslinked dextran polymer according to the invention is a dextran polymer wherein the dextran polymer backbone is a dextran having a weight average molecular weight (Mw) from 5 to 25 kDa before crosslinking or substitution.

In an embodiment, the crosslinked dextran polymer according to the invention is a dextran polymer wherein the dextran polymer backbone is a dextran having a weight average molecular weight (Mw) from 250 to 1000 kDa before crosslinking or substitution.

In an embodiment, the crosslinked dextran polymer according to the invention is a dextran polymer wherein the dextran polymer backbone is a dextran having a weight average molecular weight (Mw) comprised from 10 to 500 kDa before crosslinking or substitution.

In an embodiment, the crosslinked dextran polymer according to the invention is a dextran polymer wherein the dextran polymer backbone is a dextran having a weight average molecular weight (Mw) comprised from 20 to 100 kDa before crosslinking or substitution.

In an embodiment, the crosslinked dextran polymer according to the invention is a dextran polymer wherein the dextran polymer backbone is a dextran having a weight average molecular weight (Mw) comprised from 20 to 50 kDa before crosslinking or substitution.

In an embodiment, the crosslinked dextran polymer according to the invention is a dextran polymer wherein the degree of substitution ($DS_1$) of dextran backbone with $-(R_1)_mG_1-$ groups is comprised in the range from 0.001 to 0.4 ($0.001 \leq DS_1 \leq 0.4$).

In an embodiment, the crosslinked dextran polymer according to the invention is a dextran polymer wherein the degree of substitution ($DS_1$) of dextran backbone with $-(R_1)_mG_1-$ groups is comprised in the range from 0.01 to 0.4 ($0.01 \leq DS_1 \leq 0.4$).

In an embodiment, the crosslinked dextran polymer according to the invention is a dextran polymer wherein the degree of substitution ($DS_1$) of dextran backbone with $-(R_1)_mG_1-$ groups is comprised in the range from 0.1 to 0.4 ($0.1 \leq DS_1 \leq 0.4$).

In an embodiment, the crosslinked dextran polymer according to the invention is a dextran polymer wherein the dextran polymer backbone is a dextran having a weight average molecular weigth (Mw) is from 5 to 250 kDa before

crosslinking or substitution and the degree of substitution ($DS_1$) of dextran backbone with $-(R_1)_mG_1$-groups is comprised in the range from 0.1 to 0.4 ($0.1 \leq DS_1 \leq 0.4$).

In an embodiment, the crosslinked dextran polymer according to the invention is a dextran polymer wherein the dextran polymer backbone is a dextran having a weight average molecular weight (Mw) is from 20 to 100 kDa before crosslinking or substitution and the degree of substitution ($DS_1$) of dextran backbone with $-(R_1)_mG_1$- groups is comprised in the range from 0.2 to 0.4 ($0.2 \leq DS_1 \leq 0.4$).

In an embodiment, the crosslinked dextran polymer according to the invention is a dextran polymer wherein the dextran polymer backbone is a dextran having a weight average molecular weight (Mw) from 20 to 100 kDa before crosslinking or substitution and the degree of substitution ($DS_1$) of dextran backbone with $-(R_1)_mG_1$-groups is comprised in the range from 0.2 to 0.3 ($0.2 \leq DS_1 \leq 0.3$).

In an embodiment, the crosslinked dextran polymer according to the invention is a dextran polymer wherein the dextran polymer backbone is a dextran having a weight average molecular weight (Mw) is from 250 to 1000 kDa before crosslinking or substitution and the degree of substitution ($DS_1$) of dextran backbone with $-(R_1)_mG_1$- groups is comprised in the range from 0.001 to 0.4 ($0.001 \leq DS_1 \leq 0.4$).

In an embodiment, the crosslinked dextran polymer according to the invention is a dextran polymer wherein the dextran polymer backbone is a dextran having a weight average molecular weight (Mw) is from 250 to 1000 kDa before crosslinking or substitution and the degree of substitution ($DS_1$) of dextran backbone with $-(R_1)_mG_1$- groups is comprised in the range from 0.01 to 0.4 ($0.01 \leq DS_1 \leq 0.4$).

In an embodiment, the crosslinked dextran polymer according to the invention is a dextran polymer wherein the dextran polymer backbone is a dextran having a weight average molecular weigth (Mw) is from 250 to 1000 kDa before crosslinking or substitution and the degree of substitution ($DS_1$) of dextran backbone with $-(R_1)_mG_1$- groups is comprised in the range from 0.1 to 0.4 ($0.1 \leq DS_1 \leq 0.4$).

In an embodiment, the crosslinked dextran polymer according to the invention is a dextran polymer wherein the degree of substitution ($DS_2$) of dextran backbone with carboxylate groups according to formula I is comprised in the range from 0.5 to 3 ($0.5 \leq DS_2 \leq 3$).

In an embodiment, the crosslinked dextran polymer according to the invention is a dextran polymer wherein the degree of substitution ($DS_2$) of dextran backbone with carboxylate groups according to formula I is comprised in the range from 1 to 2.75 ($1 \leq DS_2 \leq 2.75$).

In an embodiment, the crosslinked dextran polymer according to the invention is a dextran polymer wherein the degree of substitution ($DS_2$) of dextran backbone with carboxylate groups according to formula I is comprised in the range from 1.5 to 2.5 ($1.5 \leq DS_2 \leq 2.5$).

In an embodiment, the crosslinked dextran polymer according to the invention is a dextran polymer wherein the degree of substitution ($DS_2$) of dextran backbone with carboxylate groups according to formula I is comprised in the range from 1.75 to 2.25 ($1.75 \leq DS_2 \leq 2.25$).

In an embodiment, the crosslinked dextran polymer according to the invention is a dextran polymer having a molar ratio between the molar concentration of $-(R_1)_mG_1$- radical and the molar concentration of the reactive functions of crosslinker $L(-)_i$ is comprised in a range from 0.5 to 1.5 ($0.5 \leq DC \leq 1.5$).

In an embodiment, the crosslinked dextran polymer according to the invention is a dextran polymer having a molar ratio between the molar concentration of $-(R_1)_mG_1$- radical and the molar concentration of the reactive functions of crosslinker $L(-)_i$ is comprised in a range from 0.8 to 1.2 ($0.8 \leq DC \leq 1.2$).

In an embodiment, the crosslinked dextran polymer according to the invention is a dextran polymer having a molar ratio between the molar concentration of $-(R_1)_mG_1$- radical and the molar concentration of the reactive functions of crosslinker $L(-)_i$ is comprised in a range from 0.9 to 1.1 ($0.9 \leq DC \leq 1.1$).

In an embodiment, the crosslinked dextran polymer according to the invention is a dextran polymer having a molar ratio between the molar concentration of $-(R_1)_mG_1$- radical and the molar concentration of the reactive functions of crosslinker $L(-)_i$ is comprised in a range from 0.95 to 1.05 ($0.95 \leq DC \leq 1.05$).

In an embodiment, the crosslinked dextran polymer according to the invention is a dextran polymer having a molar ratio between the molar concentration of $-(R_1)_mG_1$- radical and the molar concentration of the reactive functions of crosslinker $L(-)_i$ is 1 (DC = 1).

The invention also concerns a hydrogel comprising the crosslinked dextran polymer according to the invention.

In an embodiment the hydrogel according to the invention is characterized in that Tan $\delta$ is lower than 1.

In an embodiment the hydrogel according to the invention is characterized in that after swelling in water the crosslinked dextran polymer concentration is comprised from 0.01 to 0.2 g/g.

In an embodiment the hydrogel according to the invention is characterized in that after swelling in water the crosslinked dextran polymer concentration is comprised from 0.03 to 0.1 g/g.

In an embodiment the hydrogel according to the invention is characterized in that after swelling in water the crosslinked dextran polymer concentration is comprised from 0.05 to 0.1 g/g.

In an embodiment the hydrogel according to the invention is characterized in that it further comprises biological

cells.

In an embodiment the cells are cells from human or animal origin.

In an embodiment the cells are cell lines.

In an embodiment the cells are stem-cells derived.

In an embodiment the stem cells are chosen from embryonic-stem cells, from induced-pluripotent-stem-cells or from mesenchymal-stem-cells.

In an embodiment the cells are primary cells.

In an embodiment the cells are proteins, hormone or peptide secreting cells.

In an embodiment the cells are chosen from

- insulin secreting cells for diabetes treatment
- Factor VIII or Factor IX secreting cells for hemophilia treatment and
- β-glucocerebrosidase secreting cells for Gaucher disease.

In an embodiment the hydrogel according to the invention is characterized in that insulin secreting cells are chosen into the group of pancreatic cells.

In an embodiment the hydrogel according to the invention is characterized in that insulin secreting cells are Langherans islets.

In an embodiment the hydrogel according to the invention is characterized in that the biological cells are pseudo islets.

The invention also concerns the use of a crosslinked dextran copolymer according to the invention into the form of a hydrogel to prepare a cells composition.

In an embodiment the cells are chosen amongst one or multiple type of cells, either isolated or aggregated, which may secrete active principles".

The invention also concerns a process to synthetize a dextran bearing carboxylate groups and at least one $-(R_1)_mG_2$ substituent

- wherein $-G_2$, a Michael acceptor, precursor of $-G_1$ is chosen amongst linear or branched or cyclic alkyl monovalent radical comprising from 1 to 6 carbon atoms and may comprise heteroatoms such as oxygen, nitrogen or sulfur,
- $R_1$ being defined as above,

comprising the steps of:

a) preparation of a dextran bearing carboxylate groups solution,
b) substitution with $-(R_1)_mG_2-$.

In an embodiment, the dextran bearing carboxylate groups and at least one $-(R_1)_mG_2$ substituent according to the invention is a dextran polymer wherein $-G_2$-is chosen amongst maleimide or vinylsulfone.

In particular embodiments the dextran bearing carboxylate groups and at least one $-(R_1)_mG_2-$ substituent is crosslinked with a precursor of the $L(-)_i$.

The crosslinking step is performed by mixing of solutions comprising the dextran bearing carboxylate groups and at least one $-(R_1)_mG_2$ substituent and a precursor of the linker $L(-)_i$

In an embodiment, the precursor of the linker $L(-)_i$ bears functional group ie -SH groups that react with a $-(R_1)_mG_2$ group that comprises vinyl sulfone or maleimide groups in a Michael addition reaction to give the crosslinked dextran polymer of the invention.

The crosslinking step is performed with solutions that comprise from 1 to 150 mM, preferably from 10 to 100 mM of reactive functions $-(R_1)_mG_2-$ of the precursor of the dextran carboxylate.

The crosslinking step is performed with solutions that comprise from 1 to 150 mM, preferably from 10 to 100 mM of reactive functions of the precursor of the linker $L(-)_i$

In an embodiment, in the crosslinking step, the solution of the dextran polymer precursor bearing reactive functions $-(R_1)_mG_2$ and the solution of the linker $L(-)_i$ precursor are in used in equimolar ratio (1:1).

The crosslinking step is a gelation step that results into a hydrogel of the invention.

The hydrogel formation kinetic is function of the temperature and could be modulated by the reactant's concentrations, pH and temperature.

In an embodiment the time to obtain a hydrogel according to the invention is comprised from 1 minute to 6 hours.

In an embodiment the crosslinking step is carried out for 1 hour.

In an embodiment the temperature of the crosslinking step is comprised from 4 °C to room temperature and could be modulated between the step of mixing to the step of gelation and moulding.

In an embodiment the mixing is performed at 4 °C and the gelation is carried out at room temperature for 1 hour.

In an embodiment, after crosslinking or gelation, the hydrogel is swelled in a buffer solution, the pH of the buffer solution is comprised from 5 to 8, preferably from 6 to 8 and more preferably from 6.8 to 7.5.

In an embodiment the swelling allows the hydrogel mass concentration being increased by 1, 2, 3 or 4 compared to its initial mass.

In an embodiment the mass concentration of the hydrogel after swelling is comprised from 0.01 to 0.2 g/g.

In an embodiment the mass concentration of the hydrogel after swelling is comprised from 0.03 to 0.1 g/g.

In an embodiment the mass concentration of the hydrogel after swelling is comprised from 0.05 to 0.1 g/g.

The invention also concerns a process to synthetize a crosslinked dextran polymer according to claim 1, into the form of a hydrogel, comprising the steps of:

a) preparation of a sterile solution comprising a dextran bearing methyl carboxylate groups according to formula I and at least one $-(R_1)_mG_2$ substituant,
b) preparation of a sterile solution of mercaptopolyethyleneglycol or mercaptoethyl polyoxyethylene
c) addition of a the sterile solution obtained from step b to the solution obtained from step a,
d) the addition being directly done in a mould or the addition is done and then the mixed solutions are added into a mould,
e) crosslinking and gelation by Michael reaction, for example at room temperature or at 37°C,
f) unmoulding, swelling, to obtain an hydrogel.

In an embodiment steps c) and d) are done simultaneously.

In an embodiment, the sxelling is done into a PBS solution at pH 7,4.

In an embodiment of the process according to the invention an active pharmaceutical ingredient (API) is entrapped into the hydrogel.

The invention also concerns a therapeutic use of the hydrogel according to the invention as a therapeutic implant to administer the API to a mammal.

The invention also concerns a process to prepare a hydrogel comprising biological cells comprising the steps of:

a) preparation of a sterile solution comprising a dextran bearing methyl carboxylate groups according to formula I and at least one $-(R_1)_mG_2$ substituant,
b) preparation of a sterile solution of mercaptopolyethyleneglycol or mercaptoethyl polyoxyethylene,
c) preparation of a suspension of biological cells,
d) mixing the biological cells suspension and the solution obtained form the step b or a,
e) addition of a the sterile solution obtained from step d to the solution obtained from step d,
f) the addition of step e being either done directly in a mould or the solutions are introduced into a mould after being mixed,
g) crosslinking and gelation by Michael reaction at room temperature,
h) unmoulding, swelling (into a PBS solution at pH 7,4) to obtain an hydrogel comprising biological cells.

In an embodiment the hydrogel according to the invention is characterized in that it further comprises biological cells.

In an embodiment the cells are cells from human or animal origin.

In an embodiment the cells are cell lines.

In an embodiment the cells are stem-cells derived.

In an embodiment the stem cells are chosen from embryonic-stem cells, from induced-pluripotent-stem-cells or from mesenchymal-stem-cells.

In an embodiment the cells are primary cells.

In an embodiment the cells are proteins, hormone or peptide secreting cells.

In an embodiment the cells are chosen from

- insulin secreting cells for diabetes treatment
- Factor VIII or Factor IX secreting cells for hemophilia treatment and
- β-glucocerebrosidase secreting cells for Gaucher disease.

In an embodiment the hydrogel according to the invention is characterized in that insulin secreting cells are chosen into the group of pancreatic cells.

In an embodiment the hydrogel according to the invention is characterized in that insulin secreting cells are Langherans islets.

In an embodiment the hydrogel according to the invention is characterized in that the biological cells are pseudo islets.

The invention also concerns a therapeutic use of the hydrogel according to the invention for treating a disorder or disease in a mammal wherein the disorder or disease is due to lack or malfunction of endocrine function of pancreas organ.

The invention also concerns a hydrogel for use as a medicament.

The invention also concerns a hydrogel for use in the treatment of a disease such as diabetes.

The invention also concerns an implantable device comprising at least a hydrogel according the invention and obtained according to the process of the invention.

The cells or the API are entrapped into the maze of crosslinked dextran hydrogel.

In this specification the word "entrapped" is equivalent to "encapsulated" or "encapsulation".

The hydrogel matrix allows passage of small molecules e.g. nutrients and API, API being entrapped into the hydrogel or secreted by the entrapped cells.

Typically, API are hormone and peptide drugs chosen amongst PTH protein, insulin and coagulation factors.

In an embodiment, the Mesh sizes of the matrix is immunoisolant and stops the T lymphocytes in order to preserve the cells. In an embodiment, this mesh size is less than 1 μm. In another embodiment it is less that 100 nanometers, preferably less than 10 nanometers, and more preferably around 5 nanometers.

## EXAMPLES

### Part A - CHEMISTRY

Example A1 : Synthesis of substituted dextranmethylcarboxylate (DMCMal)

**Table 1. List of synthesized polysaccharides DMCMal**

| Polysaccharides | Structure |
|---|---|
| Polysaccharide DMCMal-1 | 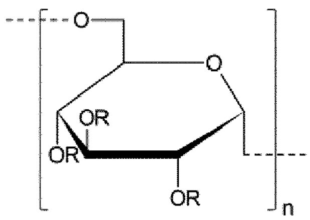<br>Mw (Dextran) = 40 kg/mol<br>n = 205<br>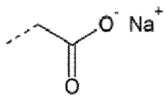 or 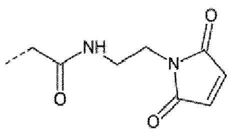<br>R = H or<br>$DS_2$ = 1.2<br>$DS_1$ = 0.24 |

(continued)

| Polysaccharides | Structure |
|---|---|
| Polysaccharide DMCMal-2 | 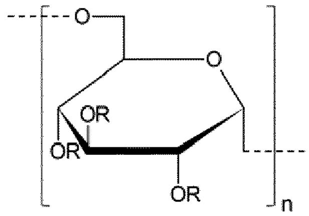<br>Mw (Dextran) = 40 kg/mol<br>n = 205<br>R = H or 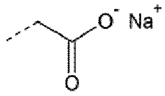 or 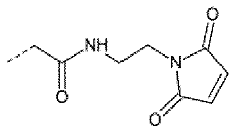<br>$DS_2$ = 2.25<br>$DS_1$ = 0.24 |
| Polysaccharide DMCMal-3 | 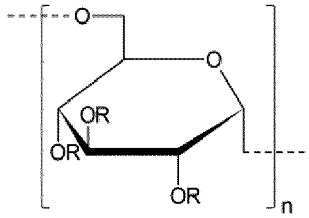<br>Mw (Dextran) = 500 kg/mol<br>n = 2200<br>R = H or 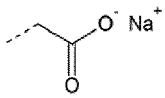 or 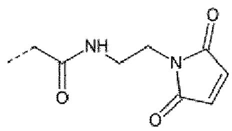<br>$DS_2$ = 1.0<br>$DS_1$ = 0.25 |
| Polysaccharide DMCMal-4 | 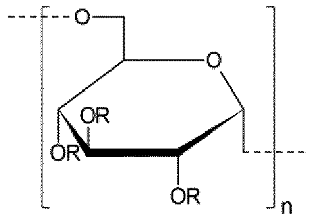<br>Mw (Dextran) = 500 kg/mol<br>n = 2200<br>R = H or 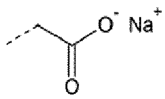 or 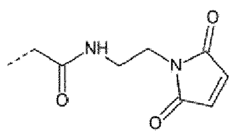<br>$DS_2$ = 1.0<br>$DS_1$ = 0.09 |

**Polysaccharide DMCMal-1**

Polysaccharide DMC-1:

65 g (0.4 mol of glucoside units, 1.2 mol of hydroxyl functional groups) of dextran having a weight-average molar mass of 40 kg/mol (Pharmacosmos, degree of polymerization n= 205), are dissolved in water (285 g/L) at 30 °C, then $NaBH_4$ (74 mg, 1.95 mmol) is added and the mixture is stirred at 30 °C for 2 h. To this solution is added sodium chloroacetate (140 g, 1.2 mol) and the mixture is heated at 65 °C for 1 h. 10 N NaOH (200 mL, 2 mol) is then slowly added over 1.5h and the mixture is stirred at 65 °C for 1 h. The mixture is diluted with water (120 mL), cooled to room temperature, neutralized with acetic acid and then purified by ultrafiltration on PES membrane (MWCO 5 kDa) against phosphate buffer pH 7, then water. The polysaccharide DMC-1 concentration of the final solution is determined by dry extract, and then an acid/base assay is carried out in order to determine the degree of substitution with methyl carboxylate.
According to the dry extract: [polysaccharide DMC-1] = 50.6 mg/g
According to the acid/base assay, degree of substitution with methylcarboxylate ($DS_2$) = 1.2

Polysaccharide DMCMal-1:

To 158 g of the solution of polysaccharide DMC-1 obtained above (50.6 mg/g, $DS_2$ = 1.2, 10.0 g of polysaccharide DMC-1, 38.73 mmol of glucoside units) 2-hydroxypyridine 1-oxide (HOPO) (4.30 g, 38.73 mmol) is added and the mixture is cooled to 4 °C. To this solution are added N-(2-aminoethyl)maleimide hydrochloride (Mal) (2.05 g, 11.62 mmol), $Et_3N$ (1.62 mL, 11.62 mmol) and N-ethyl-N'-(3-dimethylaminopropyl)carbodiimide hydrochloride (EDC) (7.42 g, 38.73 mmol) and the reaction mixture is stirred at 4 °C for 4 h. Two additional additions of EDC (7.42 g, 38.73 mmol) are processed every 4 h. The mixture is diluted with phosphate buffer pH 7, then purified by ultrafiltration on PES membrane (MWCO 5 kDa) against phosphate buffer pH 7, NaCl (9 g/L) in water and then water. The polysaccharide DMCMal-1 concentration of the final solution is determined by dry extract, and the degree of substitution with maleimide is determined by $^1H$ NMR in $D_2O$. The final solution is stored at -20 °C or freezed-dried.
According to the dry extract: [polysaccharide DMCMal-1] = 18.0 mg/g
According to $^1H$ NMR ($D_2O$), degree of substitution with maleimide ($DS_1$) = 0.24

**Polysaccharide DMCMal-2**

Polysaccharide DMC-2:

90 g (0.35 mol of glucoside units) of freeze-dried polysaccharide DMC-1 are dissolved in water (260 g/L) at 65 °C, then sodium chloroacetate (204 g, 1.75 mol) is added and the mixture is maintained at 65 °C for 1 h. 10 N NaOH (175 mL, 1.75 mol) is then slowly added over 1 h and the mixture is stirred at 65 °C for a further 1 h. Another portion of sodium chloroacetate (122 g, 1.05 mol) is then added and the mixture is maintained at 65 °C for 0.5 h. 10 N NaOH (105 mL, 1.05 mol) is then slowly added over 1 h and the mixture is stirred at 65 °C for a further 1 h. The mixture is diluted with water, cooled to room temperature, neutralized with acetic acid and then purified by ultrafiltration on PES membrane (MWCO 5 kDa) against phosphate buffer pH 7, then water. The polysaccharide DMC-2 concentration of the final solution is determined by dry extract, and then an acid/base assay is carried out in order to determine the degree of substitution with methyl carboxylate.
According to the dry extract: [polysaccharide DMC-2] = 48.8 mg/g
According to the acid/base assay, degree of substitution with methylcarboxylate ($DS_2$) = 2.25

Polysaccharide DMCMal-2:

Using a process similar to the one used for the preparation of polysaccharide DMCMal-1, starting from polysaccharide DMC-2 (48.8 mg/g, $DS_2$ = 2.25, 10.0 g, 29.22 mmol of glucoside units) and with N-(2-aminoethyl)maleimide hydrochloride (1.55 g, 8.77 mmol), polysaccharide DMCMal-2 is obtained.
According to the dry extract: [polysaccharide DMC-2] = 17.9 mg/g
According to $^1H$ NMR ($D_2O$), degree of substitution with maleimide ($DS_1$) = 0.24

**Polysaccharide DMCMal-3**

Polysaccharide DMC-3:

Using a process similar to the one used for the preparation of polysaccharide DMC-1, starting from a dextran

having a weight-average molar mass of 500 kg/mol, polysaccharide DMC-3 is obtained.

According to the dry extract: [polysaccharide DMC-3] = 34.3 mg/g

According to the acid/base assay, degree of substitution with methylcarboxylate (DS2) = 1.0

Polysaccharide DMCMal-3:

Using a process similar to the one used for the preparation of polysaccharide DMCMal-1, starting from polysaccharide DMC-3 (34.3 mg/g, $DS_2$ = 1.0, 10.0 g, 41.29 mmol of glucoside units) and with N-(2-aminoethyl)maleimide hydrochloride (2.19 g, 12.39 mmol), polysaccharide DMCMal-3 is obtained.

According to the dry extract: [polysaccharide DMCMal-3] = 12.0 mg/g

According to $^1$H NMR ($D_2O$), degree of substitution with maleimide ($DS_1$) = 0.25

**Polysaccharide DMCMal-4**

Using a process similar to the one used for the preparation of polysaccharide DMCMal-1, starting from polysaccharide DMC-3 (34.3 mg/g, $DS_2$ = 1.0, 10.0 g, 41.29 mmol of glucoside units) and with N-(2-aminoethyl)maleimide hydrochloride (729 mg, 4.13 mmol), polysaccharide DMCMal-4 is obtained.

According to the dry extract: [polysaccharide DMCMal-4] = 18.0 mg/g

According to $^1$H NMR ($D_2O$), degree of substitution with maleimide ($DS_1$) = 0.09

**Example A2** : **Polyethylene glycol derivatives comprising at leasttwo thiol functions (called in this specification "PEG-SH")**

Commercial PEG derivatives functionalized with thiol (SH) groups were purchased. Linear homo bifunctional PEG-SH and multi-arm homofunctional PEG-SH having different molecular weights were used and are shown in the following Table 2.

Table 2 : List of commercial PEG-SH used

| PEG-SH | Chemical Name | Thiol groups | Mn (kg/mol) |
|---|---|---|---|
| PEG-SH-1 | Poly(ethylene glycol) dithiol | 2 | 3.4 |
| PEG-SH-2 | Poly(ethylene glycol) dithiol | 2 | 1 |
| PEG-SH-3 | Pentaerythritol tetra(mercaptoethyl) polyoxyethylene | 4 | 5.2 |
| PEG-SH-4 | Pentaerythritol tetra(mercaptoethyl) polyoxyethylene | 4 | 20 |

**Part B** - **BIOLOGY**

**Example B1: Preparation of pseudoislets**

Beta-TC-tet cell line (ATCC) was cultivated in culture medium (MEM supplemented with 10% Fetal Bovine Serum and 1% Penicilin/Streptomycin) in an incubator at 37 °C and 5% $CO_2$. Cells were subcultured 2-3 times a week using 0.05% trypsin / EDTA to detach the cells and diluted 5 times in culture medium.

150 μm pseudoislets were formed using Beta-TC-tet cell line using agarose 300 μm microwell moulds formed with Microtissue® templates (Sigma-Aldrich) by seeding 200 cells per microwell and incubating them at 37 °C and 5% $CO_2$ for 3 days. Pseudoislets were then collected, concentrated by centrifugation, and finally suspended in 0.9% NaCl.

**Part C** - **PHYSICO-CHEMISTRY**

**Example C1: Preparation of solutions of concentrated polysaccharide DMCMal**

A concentrated polysaccharide solution is prepared by weighing the appropriate weight of a sterile freeze-dried polysaccharide obtained according to part A1 and adding the appropriate weight of sterile deionised water. The solution is placed on an orbital shaker overnight at 70 rpm for complete solubilization. The pH of the solution is adjusted to pH 3, pH 4 or pH 5 by addition of concentrated HCl (4 mol/L). The mass concentration of the solution of polysaccharide DMCMal (mg/g) is determined by dry exact. The volume concentration of the solution of polysaccharide DMCMal (mg/mL) is determined by density measurements, weighing three times 100 μL of solution. The solution is frozen at -20 °C until

being used.

### Example C2: Preparation of solutions of concentrated PEG-SH

A concentrated solution of PEG-SH (from the list according to table 2) is prepared by weighing the appropriate weight of a PEG-SH powder and adding the appropriate weight of sterile deionised water. The solution is placed on roller shaker at 15 rpm for 2 h for complete solubilization before sterile filtration (0.22 μm). The mass concentration of the PEG-SH solution (mg/g) is determined by dry exact. The volume concentration of the PEG-SH solution (mg/mL) is determined by density measurements, weighing three times 100 μL of solution. The solution is frozen at -20 °C until being used.

### Example C3: Hydrogel preparation

The preparation of the hydrogel is made in an aseptic environment.

Polysaccharide DMCMal and PEG-SH concentrated sterile solutions prepared according to example C1 and C2 respectively are equilibrated either at room temperature (20-25 °C) or at 4 °C.

225 μL of a concentrated solution of PEG-SH is added to 225 μL of a concentrated solution of polysaccharide DMCMal in a 2 mL Eppendorf. The solutions are mixed with a pipette and 200 μL of mixture are introduced in a rectangular silicone mould (IBIDI 12x7.75 mm). Gelation is carried out for 1 h at room temperature (20-25 °C). The hydrogel is unmoulded and introduced in a 10 mL PBS (phosphate buffer saline) solution at pH 7.4 for 2 h at 37 °C. Optionally the PBS solution contain 10 mM of cysteine. The hydrogel is rinsed with a 10 mL of PBS solution without cysteine and further immersed in 20 mL of the PBS solution overnight at 37 °C. The hydrogel piece is then stored in 10 mL of PBS solution at 4 °C until being used.

### Example C4: Hydrogel compositions

Different hydrogel compositions were prepared according to the protocol described in Example C3 (Table 3). Concentrations of reactive groups (maleimide (Mal) and thiol (SH)) and polymers (polysaccharide DMCMal and PEG-SH) correspond to the final concentration upon mixing of the polymer solutions.

| Example | Polysaccharide DMCMal | PEG-SH | Mal: SH (mM:mM) | [DMCMal] (mg/mL) | pH | [PEG-SH] (mg/mL) | Mixing Temperature (°C) |
|---|---|---|---|---|---|---|---|
| C4-1 | DMCMal-1 | PEG-SH-1 | 18:18 | 22.8 | 4 | 35.1 | 20-25 |
| C4-2 | DMCMal-1 | PEG-SH-1 | 40:40 | 50.7 | 4 | 78.1 | 20-25 |
| C4-3 | DMCMal-2 | PEG-SH-1 | 36:36 | 54.9 | 4 | 70.3 | 20-25 |
| C4-4 | DMCMal-2 | PEG-SH-1 | 36:36 | 54.9 | 4 | 70.3 | 20-25 |
| C4-5 | DMCMal-2 | PEG-SH-2 | 72:72 | 109.9 | 4 | 42.7 | 4 |
| C4-6 | DMCMal-2 | PEG-SH-3 | 36:36 | 54.9 | 4 | 49.2 | 4 |
| C4-7 | DMCMal-2 | PEG-SH-4 | 10:10 | 13.1 | 4 | 54 | 4 |
| C4-8 | DMCMal-2 | PEG-SH-4 | 10:10 | 13.1 | 5 | 54 | 4 |
| C4-9 | DMCMal-2 | PEG-SH-4 | 18:18 | 23.5 | 4 | 97.2 | 4 |
| C4-10 | DMCMal-4 | PEG-SH-1 | 19:19 | 53 | 4 | 37.1 | 20-25 |
| C4-11 | DMCMal-3 | PEG-SH-1 | 40:40 | 42.4 | 4 | 78.1 | 4 |

*Compositions examples C4-1, C4-2, C4-3 and C4-10 have not been washed with PBS solution comprising cysteine.*

Table 3 Compositions of various hydrogels made of a DMCMal polysaccharide and a PEG-SH polymer

Solid rectangular hydrogel pieces are obtained. The 12x7.75x2.1 mm hydrogels pieces are easily unmoulded and handled with tweezers for characterization.

**Example C4': Hydrogel rheological characterization**

Oscillatory shear test is carried out with a rotational rheometer (AR2000, TA instrument) equipped with a cone plate geometry. The gelation is done "in situ", meaning that drops of polysaccharide and PEG concentrated solutions are introduced between cone one and plate and mixed by rotation of the geometry before starting oscillations measurements. Oscillation time sweep tests are carried out at 25 °C, with a constant strain of 0.1% and constant oscillation frequency of 1 Hz. The storage modulus G' (i.e. elastic modulus) and the loss modulus G" (i.e. viscous modulus) as well as Tan δ (ratio G'/G") values are reported at 1600 s in the plateau region of the measure of (G',G") as a function of time.

| Example | Mal: SH (mM:mM) | [DMCMal] (mg/mL) | [PEG-SH] (mg/mL) | G' (kPa) 1600s | Tan δ (G'' /G' ) |
|---|---|---|---|---|---|
| C4-1 | 18:18 | 22.8 | 35.1 | 8.4 | <0.01 |
| C4-2 | 40:40 | 50.7 | 78.1 | 17.6 | <0.01 |
| C4-4 or C4-5 | 36:36 | 54.9 | 70.3 | 23.8 | <0.01 |
| C4-5 | 72:72 | 109.9 | 42.7 | 54 | <0.01 |
| C4-6 | 36:36 | 54.9 | 49.2 | 59.7 | <0.01 |
| C4-7 | 10:10 | 13.1 | 54 | 12.7 | <0.01 |
| C4-8 | 10:10 | 13.1 | 54 | 18 | <0.01 |
| C4-9 | 18:18 | 23.5 | 97.2 | 38 | <0.01 |
| C4-10 | 19:19 | 53 | 37.1 | 4.9 | <0.01 |
| C4-11 | 40:40 | 42.4 | 78.1 | 17.5 | < 0.01 |

Table 4: Results of hydrogel rheological characterization.

Hydrogels present low values of Tan δ, meaning that G' is much higher than G" which is a typical property of chemically crosslinked hydrogels behaving as solid elastic materials (see Polysaccharide Hydrogels : Characterization and Biomedical Applications, 2016 Pan Stanford Publishing Pte. Ltd. ; Chapter 3, page 97). The increase of the concentration in Mal:SH leads to an increase of the value of elastic modulus G'.

**Example C5: Hydrogel swelling and water content**

The hydrogel piece is weighed right after unmoulding ($w_0$) and after overnight swelling ($w_{overnight}$) in the PBS solution. The swelling ratio is defined as the mass ratio $w_{overnight}/w_0$. The water content of the hydrogel is deducted from the measurement of hydrogel mass in the swollen state and the control of polymer precursors concentrations implemented to synthetize the hydrogel.

Table 5: Hydrogel swelling and water content.

| Example | Hydrogel Composition | swelling ratio | Water content (weight%) |
|---|---|---|---|
| C5-1 | C4-1 | 1.2 | 95.2 |
| C5-2 | C4-2 | 1.7 | 92.4 |
| C5-3 | C4-3 | 1.7 | 92.8 |
| C5-4 | C4-4 | 1.8 | 93.2 |
| C5-5 | C4-5 | 1.8 | 91.5 |
| C5-6 | C4-6 | 1.3 | 91.9 |
| C5-7 | C4-7 | 1.2 | 94.2 |
| C5-8 | C4-8 | 1.2 | 94.2 |
| C5-9 | C4-9 | 1.7 | 92.8 |
| C5-10 | C4-10 | 2.6 | 96.6 |

(continued)

| Example | Hydrogel Composition | swelling ratio | Water content (weight%) |
|---|---|---|---|
| C5-11 | C4-11 | 1.4 | 93.5 |

Hydrogels contain high water content. Water content varies depending on polymer precursors structures and concentrations.

**Example C6: Hydrogel stability at 37 °C in physiological medium**

Hydrogel pieces were stored in PBS at pH 7.4 or in Serum (FBS Foetal Bovine Serum) at 37 °C and weighed at different periods of time.

Table 6: Hydrogel stability in physiological medium

| Example | Hydrogel composition | medium | number of hydrogels weighed | Time at 37 °C (days) | Gel Mass (mg) |
|---|---|---|---|---|---|
| C6-1 | C4-2 | PBS | 3 | 0 | 312 ± 4 |
| | | | | 22 | 316 ± 7 |
| | | | | 77 | 310 ± 6 |
| C6-2 | C4-5 | PBS | 1 | 0 | 324 |
| | | | | 120 | 326 |
| | | Serum | 1 | 0 | 329 |
| | | | | 120 | 332 |

Hydrogels are retrieved intact and their mass does not evolve upon storage at 37 °C in physiological medium. Hydrogel swelling (mass increase) or dissolution (mass decrease) would be expected in case of network structure modification in case of hydrolysis side reaction for example. This shows that the hydrogel is stable under physiological conditions.

**Example C7: Encapsulation of macromolecular probes within hydrogel**

Commercial Fluorescent Dextran-FITC 3 kDa and Dextran-FITC 70 kDa are each solubilised in water to obtain concentrated stock solutions.

Polysaccharide DMCMal and PEG-SH concentrated sterile solutions prepared according to example C1 and C2, respectively, are equilibrated at 4 °C.

The solution of polysaccharide DMCMal is mixed with a fluorescent dextran. 100 μL of a concentrated solution of PEG-SH is added to 100 μL of a concentrated solution of polysaccharide DMCMal and fluorescent dextran. The solutions are mixed with a pipette and 200 μL of the latter mixture are introduced in a rectangular silicone mould (IBIDI 12x7.75 mm). Gelation is carried out for 1 h at room temperature (20-25 °C).

The hydrogel piece is unmoulded, introduced in a well (12 well multi-plate) and immersed with 1.3 mL of a buffer solution of Tris (200 mM)/NaCl (50 mM) at pH 8 containing the same concentration of encapsulated fluorescent dextran. Hydrogel swelling is performed overnight at 37 °C and the supernatant is weighed to estimate the degree of swelling and the quantity (mg) in the hydrogel volume.

Hydrogels are quickly rinsed twice with 1 mL of a buffer solution of Tris (200 mM)/NaCl (50 mM) at pH 8 before release experiment (shown in example C8).

| Example | Polysaccharide DMCMal | PEG-SH | Mal: SH (mM:mM) | [Polysaccharide DMCMal] (mg/mL) | pH | [PEG-SH] (mg/mL) | Dextran (kda) | [Dextran] (mg/mL) |
|---|---|---|---|---|---|---|---|---|
| C7-1 | DMCMal-2 | PEG-SH-1 | 36:36 | 54.9 | 4 | 70.3 | 3 | 1.5 |
| C7-2 | DMCMal-2 | PEG-SH-1 | 36:36 | 54.9 | 4 | 70.3 | 70 | 1.5 |

Table 7: Composition of hydrogel with encapsulated fluorescent macromolecular probe

**Example C8: Release of macromolecular probes within hydrogel**

Hydrogels with encapsulated fluorescent probe as produced in Example C7 are each introduced in a well (12 well multi-plate) and immersed with 2 mL of a buffer solution of Tris (200 mM)/NaCl (50 mM) at pH 8. The plate is covered with a film and introduced in an oven at 37 °C. 200 μL of buffer are sampled at different time point and replaced by fresh buffer. Fluorescent probe concentration in the samples is determined by fluorescence (fluorescent plate reader SAFAS) using a calibration curve. The cumulative fraction of fluorescent probe released at each time point corresponds to the ratio of the cumulative quantity of fluorescent probe released to the initial quantity of fluorescent probe in the swollen hydrogel.

Table 8: Cumulative fraction of macromolecular probes released from the hydrogel at different time points.

| Composition | Time (h) | 0.25 | 0.5 | 1 | 2 | 6 | 72 |
|---|---|---|---|---|---|---|---|
| C7-1 | % Dextran 3 kDa released | 8.8 | 12 | 17.5 | 24 | 30.3 | 32 |
| C7-2 | % Dextran 70 kDa released | 0.3 | 0.7 | 1.2 | 1.8 | 3.8 | 4.8 |

Increasing the size of the macromolecular probe leads to a slower kinetic of release. This shows the permselective property of the hydrogel's network structure.

**Example C9: Encapsulation of Beta-TC-tet pseudo islets in Hydrogels**

Pseudoislets encapsulation is made in an aseptic environment.

Polysaccharide DMCMal and PEG-SH concentrated sterile solutions prepared according to examples C1 and C2, respectively, are adjusted with a concentrated NaCl solution in order to obtain isotonic stock solutions (300 mOsm/kg). Solutions are equilibrated either at room temperature (20-25 °C) or at 4 °C.

A concentrated mixture of PEG-SH and pseudo islets is prepared by mixing equal volumes of isotonic PEG-SH solution and pseudo islets suspension (prepared according to example B1). Then the mixture containing PEG-SH and pseudo islets is gently mixed with an equivalent volume of isotonic concentrated solution of polysaccharide DMCMal using a pipette.

The mixture containing the polysaccharide DMCMal, PEG-SH and pseudoislets is introduced in a mould, such

as a rectangular silicone mould (IBIDI 12x7.75 mm) or in multiwell plate.

Gelation is carried out for 30 min at room temperature (20-25 °C). Rectangular hydrogel piece is unmoulded and introduced in a multiwell plate. Gel formed in the multiwell plate is kept at room temperature.

For neutralization, 2 mL of a buffer solution of Tris (200 mM)/NaCl (50 mM) at pH 8 is added to the wells containing the gels for 15 min at room temperature (20-25 °C).

The Tris buffer solution is replaced with 2mL of culture medium containing 1 µg/mL of tetracycline to stop the cell proliferation. The hydrogel is incubated at 37 °C and 5% $CO_2$ before further use.

Different hydrogel compositions were prepared according to this process. Concentrations of reactive groups (Maleimide and Thiol) and polymers (polysaccharide DMCMal and PEG-SH) correspond to the final concentration upon mixing of the polymer solutions in presence of pseudoislets.

| Example | Polysaccharide DMCMal | PEG-SH | Mal:SH (mM:mM) | [polysaccharide DMCMal] (mg/mL) | pH | [PEG-SH] (mg/mL) | Mixing Temperature ( C) | Pseudo islets density (islets/mL) | Mould used |
|---|---|---|---|---|---|---|---|---|---|
| C9-1 | DMCMal-1 | PEG-SH-1 | 30:30 | 35.5 | 4 | 58.4 | 20-25 | 575 | 24-Well plate |
| C9-2 | DMCMal-1 | PEG-SH-2 | 40:40 | 47.3 | 4 | 23.8 | 4 | 470 | 12x7.75mm |
| C9-3 | DMCMal-1 | PEG-SH-2 | 55:55 | 65 | 4 | 32.8 | 4 | 470 | 12x7.75mm |
| C9-4 | DMCMal-1 | PEG-SH-2 | 72:72 | 85.1 | 4 | 42.9 | 4 | 470 | 12x7.75mm |

Table 9 Composition of hydrogels containing encapsulated pseudoislets

**Example 10: Moulding of thin hydrogel discs**

According to the protocol described for example C3, concentrated polymer solutions are balanced at 4 °C. The solutions are mixed with a pipette and a controlled volume of the mixture is introduced in a circular silicone isolator (0.9- or 2-mm diameter / 0.5 mm thick, from Grace Biolab) adhering to a glass slide.

Upon 15 min gelation at 20-25 °C hydrogel discs are unmoulded and weighed right after unmoulding (wo) and after overnight swelling ($w_{overnight}$) in PBS at 37 °C. The swelling ratio is defined as the mass ratio $w_{overnight}/w_0$. The diameter of the swollen hydrogel is measured with a caliper. The thickness is deduced from the measured diameter and weight of the disc.

| Example | Polysaccharide DMCMal | PEG-SH | Mal:SH (mM:mM) | pH | Mixing Temperature ( °C) | Initial Volume (µL) | Swelling ratio | Diameter | Thickness (mm) |
|---|---|---|---|---|---|---|---|---|---|
| C10-1 | DMCMal-2 | PEG-SH-4 | 18:18 | 4 | 4 | 40 | 1.7 | 10.9 | 0.83 |
| C10-2 | DMCMal-2 | PEG-SH-4 | 18:18 | 4 | 4 | 32.5 | 1.9 | 11.2 | 0.66 |
| C10-3 | DMCMal-2 | PEG-SH-4 | 18:18 | 4 | 4 | 25 | 1.8 | 10.7 | 0.52 |

Table 10 Thickness of composition of hydrogels containing encapsulated pseudoislets

The method allows to obtain hydrogels discs of controlled diameters and thicknesses by adjusting the diameter of the mould and the volume of hydrogel.

**Example 11: Determination of mechanical resistance of the hydrogels.**

For compression, a swollen rectangular hydrogel piece as described in example C3 is introduced in a flat glass crystallizer and immersed in PBS. The uniaxial compression is done in PBS a 20-25 °C by using axial force sensor of an AR2000 rheometer equipped with a flat compression plate, at a speed of 0.6 mm/min. Initial thickness of the sample is determined from the contact of the plate with the hydrogel, when the force starts to increase. The deformation is defined by the ratio of the compression displacement (mm) and the initial thickness (mm). The deformation at break is determined from the force/displacement curve. The break is defined when a decrease of the force versus displacement is observed.

For traction, dog bone shaped hydrogel pieces were prepared by moulding hydrogel in a dog bone shaped silicone mould. The uniaxial traction is done in air at 20-25 °C a with a universal mechanical tester apparatus (Instron or Zwickroell) equipped with screw grips, at a speed of 3 mm/min. Initial length of the sample is measured between the grips with a ruler. The deformation is defined by the ratio of the traction displacement (mm) and the initial length (mm). The deformation at break is determined from the force/displacement curve. The break is defined when a decrease of the force versus displacement is observed.

| Example | Composition | Polysaccharide DMCMal | PEG-SH | Mal:SH (mM:mM) | pH | Mixing Temperature ( °C) | Compression Deformation at break | Traction Deformation at break |
|---|---|---|---|---|---|---|---|---|
| C11-1 | C4-9 | DMCMal-2 | PEG-SH-4 | 18:18 | 4 | 4 | >60% | >40% |

Table 10 Thickness of composition of hydrogels containing encapsulated pseudoislets

## Part D - BIOLOGICAL EVALUATIONS OF HYDROGELS

### Example D1: Evaluation of the hydrogel cytotoxicity profile by extract test

The cytotoxicity profile of the hydrogel was evaluated using the extraction method following *ISO 10993-5: Biological evaluation of medical devices* recommendations.

The hydrogels were placed in culture medium (MEM supplemented with 10% Fetal Bovine Serum and 1% Penicilin/Streptomycin) at 3 $cm^2$/ml in a 24-well plate. They were incubated for 24 h at 37 °C and 5% $CO_2$ under orbital agitation (70 rpm) to obtain the hydrogel extraction medium. In parallel, HDFa cells were put at 7500 cells/well in culture medium in 96-well plates and incubated overnight at 37 °C and 5% $CO_2$. The next day, the medium of the cells was removed and replaced with the hydrogel incubation medium. After 24 h of incubation at 37 °C and 5% $CO_2$ of the HDFa cells with the extraction medium, the viability was measured by quantification of the intra-cellular ATP concentration with the ATPLite kit (Perkin Elmer), following the instruction of the manufacturer. The cytotoxicity percentage was calculated using the following formula:

$$Cytotoxicity = 1 - \frac{Signal_{test\ item}}{Signal_{control}}$$

The cytotoxicity of hydrogel comopsitions C4-2, C4-4, C4-9 and C4-10 was evaluated by this extract test. The results are shown in the Table below. The cytotoxicity percentage is compared to untreated control (d.). S.D. is standard deviations of the triplicate wells (n=2 Hydrogels, each extraction is deposited in triplicate cell wells).

Table 10 - Cytotoxicity of hydrogel by extract test (ISO 10993-5).

| | **C4-2** | | **C4-4** | | **C4-9** | | **C4-10** | |
|---|---|---|---|---|---|---|---|---|
| | Mean | S.D. | Mean | S.D. | Mean | S.D. | Mean | S.D. |
| Cytotoxicity | 1.5% | 1.5% | 7.6% | 8.8% | 5.6% | 4.1% | -8.7% | 7.8% |

None of the extraction medium showed any cytotoxicity compared to untreated controls (see Table 10). The variation of the length of the DMCMal polymer as well as the concentration in thiol and maleimide reactive groups does not influence the *in vitro* biocompatibility of the hydrogels. In conclusion, according to this protocol, the hydrogels did not present any *in vitro* cytotoxicity.

### Example D2: Long-term viability and basal secretion of encapsulated pseudo islets

*a) Hydrogels pseudoislets viability*

The encapsulated pseudoislets prepared according to example C9-1 were stained with a Live/Dead staining (ThermoFisher) by supplementing the culture medium with 1 μM calcein-AM and 8μM ethidium bromide for 30 min. After a washing step, pseudoislets were then imaged using epifluorescence microscopy with a 5X magnification. The cytotoxicity ratio of the red area (dead cells) over the green area (live cells) was finally calculated to determine the cytotoxicity.

*b) Basal insulin secretion quantification*

The basal insulin secretion was measured in the medium at different time points and quantified with a sandwich Enzyme Linked ImmunoSorbent Assay (ELISA) for insulin quantification using two monoclonal antibodies.

The results obtained for the viability of the pseudoislet is shown in Table 11 and 12.

Table 11 - Viability assessment of encapsulated pseudoislets in Example C9-1 hydrogel using Live/Dead staining.

| Day after encapsulation (D) | D+1 | D+2 | D+3 | D+10 |
|---|---|---|---|---|
| Cytotoxicity (%) (± standard deviation) | 5% ±7% | 3% ±2% | 8% ±9% | 4% ±3% |

Table 12- Basal insulin secretion of pseudoislets encapsulated in Example C9-1 hydrogel Even 10 days after encapsulation, more than 90% of pseudoislets are still viable (Table 11). Moreover, the insulin basal secretion of cells is also maintained (Table 12). Together, these results demonstrate that encapsulated pseudoislets survive with no major modification of their basal physiology for at least 10 days after encapsulation.

| Day after encapsulation (D) | D+3 | D+7 | D+10 |
|---|---|---|---|
| Normalized basal insulin secretion (%) | 90% | 75% | 68% |

**Example D3: Encapsulated pseudoislets functionality**

*a) Pseudoislets encapsulation*

Pseudoislets were encapsulated as described in Examples C9-2, C9-3, and C9-4.

*b) Glucose Stimulated Insulin Secretion*

3 days after encapsulation, encapsulated and unencapsulated pseudoislets were washed and incubated 60 min in Krebs buffer containing 0.1% BSA and 1mM of glucose (low glucose Krebs, equilibration step). Following 3 washing steps, pseudoislets were re-incubated 60 min in low glucose Krebs. Then, the supernatant was collected for insulin content quantification. Hydrogels were then incubated in Krebs buffer containing 0.1% BSA and 16.6 mM of glucose for 60 min. Finally, the supernatant was collected for insulin content quantification. Insulin quantification was performed using the ELISA assay described in Example D2b. The secretion index was calculated by dividing the insulin concentration measured in the high glucose Krebs and the low glucose Krebs conditions. The results obtained are shown in table 13.

S.D stands for standard deviation (n = 2 hydrogels).

Table 13 - Secretion index of unencapsulated and encapsulated pseudoislets. The insulin secretion response is similar for encapsulated and unencapsulated pseudoislets (Kruskal-Wallis test, p=0.27) for all tested hydrogel compositions (Table 13), demonstrating therefore that pseudoislet functionality is maintained in hydrogels.

| **Group** | **Secretion index ± S.D.** |
|---|---|
| Unencapsulated pseudoislets | 3.0 ± 0.3 |
| Example C9-2 | 2.6 ± 0.3 |
| Example C9-3 | 2.4 ± 0.5 |
| Example C9-4 | 2.1 ± 0.6 |

**Claims**

1. Crosslinked dextran polymer, bearing carboxylate groups, wherein at least two saccharidic units of dextran belonging to two different polymer chains are covalently linked by at least one at least divalent radical, this at least divalent radical being a linear, branched or cyclic alkyl radical comprising at least 15 carbon atoms and optionally heteroatoms such as oxygen, nitrogen or sulfur.

2. Crosslinked dextran polymer according to claim1, wherein the at least divalent radical $-L(-)_i$ is covalently bound to the dextran polymer backbone with a $-(R_1)_mG_1$-radical, wherein,

   - $L(-)_i$ is a linear or branched polyether bearing at its ends, heteroatoms such as oxygen, nitrogen or sulfur,
   - i is the valence of L and is an integer comprised from 2 to 8 ($2 \leq i \leq 8$)
   - m is an integer equal to 0 or 1,
   - $-R_1-$ is a linear or branched alkyl divalent radical comprising from 1 to 6 carbon atoms and optionally heteroatoms such as oxygen, nitrogen or sulfur,
   - $-G_1-$ is a linear or branched or cyclic alkyl divalent radical comprising from 1 to 6 carbon atoms and may comprise heteroatoms such as oxygen, nitrogen or sulfur.

**3.** Crosslinked dextran polymer according to any one of claims 1 to 2, $L(-)_i$ is a linear polyether radical bearing at its ends, at least two heteroatoms such as oxygen, nitrogen or sulfur

**4.** Crosslinked dextran polymer according to any one of claims 1 to 2, wherein -L-is a branched polyether bearing at its ends, heteroatoms such as oxygen,nitrogen or sulfur comprising at most 8 arms.

**5.** Crosslinked dextran polymer according to claim 3, wherein i=2 and $L(-)_i$ is a radical issued from a mercaptopolyethyleneglycol according to formula II :

$$-S-(OCH_2-CH_2O)_pCH_2-CH_2-S- \qquad \text{Formula II}$$

wherein p is an integer comprised from 8 to 1000 ($8 \leq p \leq 1000$).
Crosslinked dextran polymer according to any one of claims 2 to 5 wherein $L(-)_i$ is a radical according to formula III issued from a mercaptoethyl polyoxyethylene:

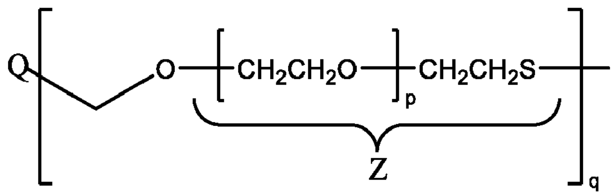

Formula III

wherein

- Q is either a carbon atom or an alkyl chain comprising from 2 to 10 carbon atoms , the alkyl chain may comprise heteroatom chosen from the group consisting of oxygen, sulfur and nitrogen
- p is an integer comprised form to y ($x \leq p \leq y$)
- q is an integer comprised form 2 to 8 ($1 \leq p \leq 8$)
- Z is $-(CH_2-CH_2)_p-CH_2-CH_2-S-$.

**6.** Crosslinked polymer according to any one of claims 2 to 5, wherein -R1- is a linear or branched or cyclic alkyl radical comprising a nitrogen atom

**7.** Crosslinked dextran polymer according to any one of claims 2 to 6, wherein radical $-R_1-$ is covalently bound by an amide function resulting of the reaction of the carboxylate groups $-(CH_2)_n-COOX$ born by the dextran with one $-R_1-$ precursor bearing an amine function.

**8.** Crosslinked dextran polymer according to any one of claims 2 to 6, wherein radical $-R_1-$ is covalently bound by an ether function resulting of the reaction of the hydroxyle function born by the dextran with one $-R_1-$ precursor bearing a leaving group, i.e. an halogen atom.

**9.** Crosslinked dextran polymer according to any one of claims 2 to 8, wherein the precursor of radical $-G_1-$ is chosen amongst maleimide or vinylsulfone.

**10.** Crosslinked dextran polymer according any f the precceding claims is a dextran polymer wherein the dextran polymer backbone is according to formula XII,

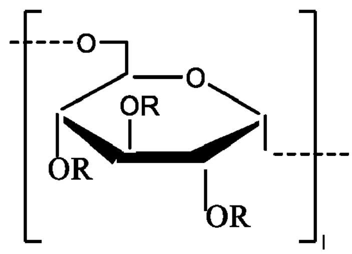

Formula XII

wherein R is chosen among

- -H, $-(CH_2)_n-COX$ or $-(R_1)_mG_1-$; l, n, m, X, $-R_1-$, $-G_1-$ and $L(-)_i$ being defined as above and $L(-)_i$ being covalently bound to another dextran polymer backbone with a $-(R_1)_mG_1-$ - radical, and
- l is comprised from 20 to 5000.

**11.** Crosslinked dextran polymer according to any one of claims 1 to 10, wherein the degree of substitution ($DS_1$) of dextran backbone with $-(R_1)_mG_1-$ groups is comprised in the range from 0.001 to 0.4 ($0.001 \leq DS_1 \leq 0.4$).

**12.** Crosslinked dextran polymer according to any one of claims 1 to 11, wherein the degree of substitution ($DS_2$) of dextran backbone with carboxylate groups according to formula I is comprised in the range from 0.5 to 3 ($0.5 \leq DS_2 \leq 3$).

**13.** Crosslinked dextran polymer according to any one of claims 1 to 11, wherein the theorical degree of crosslinking (DC) defined as a molar ratio between the molar concentration of $-(R_1)_mG_1-$ radical and the molar concentration of the reactive functions of crosslinker $L(-)_i$ is comprised in a range from 0.5 to 1.5 ($0.5 \leq DC \leq 1.5$).

**14.** Hydrogel comprising the crosslinked dextran polymer according to any one of the precceding claims.

**15.** hydrogel according to claim 14, **characterized in that** it further comprises biological cells.

**16.** Therapeutic use of the hydrogel according one of claims 14 to 15, for treating a disorder or disease in a mammal wherein the disorder or disease is due to lack or malfunction of endocrine function of pancreas organ

Europäisches Patentamt
European Patent Office
Office européen des brevets

# EUROPEAN SEARCH REPORT

Application Number
EP 21 15 1038

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | MORA NESTOR LOPEZ ET AL: "Evaluation of dextran(ethylene glycol) hydrogel films for giant unilamellar lipid vesicle production and their application for the encapsulation of polymersomes", SOFT MATTER, vol. 13, no. 33, 1 January 2017 (2017-01-01), pages 5580-5588, XP55815310, ISSN: 1744-683X, DOI: 10.1039/C7SM00551B * figure scheme 1 * ----- | 1-16 | INV. C08B31/00 C08B37/02 |
| Y | ZHANG R ET AL: "A novel pH- and ionic-strength-sensitive carboxy methyl dextran hydrogel", BIOMATERIALS, ELSEVIER, AMSTERDAM, NL, vol. 26, no. 22, 1 August 2005 (2005-08-01), pages 4677-4683, XP027767880, ISSN: 0142-9612 [retrieved on 2005-08-01] * figure 1 * ----- | 1-16 | |
| Y | HANWEI ZHANG ET AL: "In Situ Gelable Interpenetrating Double Network Hydrogel Formulated from Binary Components: Thiolated Chitosan and Oxidized Dextran", BIOMACROMOLECULES, vol. 12, no. 5, 9 May 2011 (2011-05-09), pages 1428-1437, XP055086079, ISSN: 1525-7797, DOI: 10.1021/bm101192b * figure 1 * ----- -/-- | 1-16 | TECHNICAL FIELDS SEARCHED (IPC) C08B |

1

The present search report has been drawn up for all claims

| Place of search | Date of completion of the search | Examiner |
|---|---|---|
| Munich | 18 June 2021 | Friedrich, Christof |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 1 of 2

Europäisches Patentamt
European Patent Office
Office européen des brevets

# EUROPEAN SEARCH REPORT

Application Number
EP 21 15 1038

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | ITO ET AL: "Dextran-based in situ cross-linked injectable hydrogels to prevent peritoneal adhesions", BIOMATERIALS, ELSEVIER, AMSTERDAM, NL, vol. 28, no. 23, 14 May 2007 (2007-05-14), pages 3418-3426, XP022078264, ISSN: 0142-9612, DOI: 10.1016/J.BIOMATERIALS.2007.04.017 * page 3419, column 1, paragraph 1 * ----- | 1-16 | |

TECHNICAL FIELDS SEARCHED (IPC)

1 The present search report has been drawn up for all claims

| Place of search | Date of completion of the search | Examiner |
|---|---|---|
| Munich | 18 June 2021 | Friedrich, Christof |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description


- Polysaccharide Hydrogels : Characterization and Biomedical Applications. Pan Stanford Publishing Pte. Ltd, 2016, 97